# EUROPEAN PATENT APPLICATION

(11) **EP 4 667 249 A1**
(43) Date of publication of application: **24.12.2025**
(21) Application number: 24182569.4
(22) Date of filing: 17.06.2024
(51) Int. Cl.: B60H 1/00, B60H 1/32

(54) **A VEHICLE THERMAL SYSTEM**

(71) Applicant: VOLVO TRUCK CORPORATION, 405 08 Göteborg (SE)
(72) Inventor: GROMATZKY, Jonathan, KERNERSVILLE, 27284 (US); WALKER, Todd, JAMESTOWN, 27282 (US)
(74) Representative: Kransell & Wennborg KB

(57) **Abstract**

The present disclosure relates to a vehicle thermal system, comprising a refrigerant system and a coolant system, wherein the refrigerant system comprises a first refrigerant circuit, a second refrigerant circuit, a third refrigerant circuit, a refrigerant compressor, and a four-way valve, wherein the coolant system comprises a first coolant circuit, a second coolant circuit, and a third coolant circuit wherein the coolant system further comprises a first coolant valve connected to the first and third coolant circuits, and a second coolant valve connected to the second and third coolant circuits, wherein the vehicle thermal system further comprises a first heat exchanger arranged in the first coolant circuit and in the first refrigerant circuit, a second heat exchanger arranged in the second coolant circuit and in the second refrigerant circuit, and a third heat exchanger arranged in the third coolant circuit and in the third refrigerant circuit.

## Description

### TECHNICAL FIELD

The disclosure relates generally to thermal control for vehicle systems. In particular aspects, the disclosure relates to a vehicle thermal system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As vehicle systems continues to develop, thermal management of these systems needs attention as well. For example, when changing prime mover of a vehicle from a conventional internal combustion engine to a more environmentally friendly electric machine, the demand for thermal management changes as the electric traction motor and its associated component have different desired temperature levels compared to the conventional internal combustion engine. In addition, the cab of the vehicle should preferably be controlled to assume a convenient temperature level for the operator.

Hence, there is a desire to provide a vehicle thermal system that can control a relatively high number vehicle systems and positions in a relatively simple and efficient manner, while at the same time using a low number of components for space saving and simplification.

### SUMMARY

According to a first aspect of the disclosure, there is provided a vehicle thermal system, comprising a refrigerant system and a coolant system, wherein the refrigerant system comprises: a first refrigerant circuit, a second refrigerant circuit, a third refrigerant circuit, a refrigerant compressor, and a four-way valve, wherein the first, second and third refrigerant circuits are each arranged in fluid communication with the refrigerant compressor via the four-way valve, wherein the coolant system comprises: a first coolant circuit connected to a vehicle battery system, the first coolant circuit being arranged to thermally control the vehicle battery system, the first coolant circuit comprising a first fluid pump arranged to control a flow of fluid in the first coolant circuit, a second coolant circuit connected to a radiator configured to receive ambient air, the second coolant circuit comprising a second fluid pump arranged to control a flow of fluid in the second coolant circuit, and a third coolant circuit connected to a vehicle electric system, the third coolant circuit being arranged to thermally control the vehicle electric system, the third coolant circuit comprising a third fluid pump arranged to control a flow of fluid in the third coolant circuit, wherein the coolant system further comprises a first coolant valve connected to the first and third coolant circuits, and a second coolant valve connected to the second and third coolant circuits,
wherein the vehicle thermal system further comprises: a first heat exchanger arranged in the first coolant circuit and in the first refrigerant circuit, a second heat exchanger arranged in the second coolant circuit and in the second refrigerant circuit, and a third heat exchanger arranged in the third coolant circuit and in the third refrigerant circuit.

The first aspect of the disclosure may seek to mitigate the problem of inefficient and complex thermal control of vehicle systems. A technical benefit may include that the refrigerant system and the coolant system can exchange heat with each other by the use of the first, second and third heat exchangers. In addition, the four-way valve of the refrigerant system in combination with the first and second coolant valves of the coolant system enables for simple thermal control. In particular, the above described refrigerant system and coolant system enables for operating the vehicle thermal system in a large plurality of operating modes to fulfil various thermal requirement of the vehicle systems. As described above, the first coolant circuit is connected to the vehicle battery system, the second coolant circuit is connected to the radiator, and the third coolant circuit is connected to the vehicle electric system. As such, the vehicle thermal system can control, by means of the pumps and valves, one or more of these components based on a certain thermal requirement.

The refrigerant system as well as the coolant system are preferably each arranged as closed loop systems. The refrigerant system and the coolant system are connected to each other by means of the first, second and third heat exchangers. Thus, the first, second and third heat exchangers exchange heat between the refrigerant system and the coolant system. The refrigerant system may comprise a refrigerant flowing in the first, second and third refrigerant circuits. The coolant system may comprise a coolant flowing in the first, second and third coolant circuits.

Optionally in some examples, including in at least one preferred example, the second and third heat exchangers are arranged in parallel in the refrigerant system. A technical benefit may include that heat can be absorbed from, or rejected to, one part of the coolant system and not to the other. It may, for example be desirable to reject heat to the coolant circuit at the radiator but not heating the vehicle electric system. In addition, it may be desirable to absorb heat from the vehicle electric system but not absorbing heat from the ambient environment. All circuits can hence be a source of heat absorption or a source of heat rejection depending upon the conditions of each part of the system.

Optionally in some examples, including in at least one preferred example, the refrigerant system further comprises a fourth refrigerant circuit arranged in fluid communication with the refrigerant compressor via the four-way valve, and a fourth heat exchanger arranged to be in fluid communication with a cab interior, the fourth heat exchanger being arranged in the fourth refrigerant circuit. A technical benefit may include that the fourth heat exchanger can be arranged to control the temperature level of e.g. an interior of a vehicle cab.

Optionally in some examples, including in at least one preferred example, the first and fourth heat exchangers are arranged in parallel with each other in the refrigerant system. As described above, the first heat exchanger is arranged first coolant circuit that is connected to the vehicle battery system. Connecting the fourth heat exchanger to the control the temperature of the interior of the cab may have the technical benefit that the desired temperature level of the interior of the cab is substantially the same as the optimum temperature level for the vehicle battery system. Hence, by connecting the first and fourth heat exchangers in parallel enables for a simple thermal control for controlling the temperature in the cab and of the vehicle batteries. Optimum temperature of the batteries may in turn increase the operational range for an electric traction motor fed by electric energy from the vehicle battery system.

Optionally in some examples, including in at least one preferred example, the refrigerant system further comprises a first refrigerant valve arranged in the first refrigerant circuit, the first refrigerant valve being arranged to control a flow of refrigerant in the first heat exchanger. A technical benefit may include that the flow of refrigerant to the first heat exchanger can be controlled. In particular, the refrigerant system can be controlled to prevent refrigerant to be fed to the first heat exchanger, and, as such, not exchange heat with the first coolant circuit.

Optionally in some examples, including in at least one preferred example, the refrigerant system further comprises a second refrigerant valve arranged in the second refrigerant circuit, the second refrigerant valve being arranged to control a flow of refrigerant flowing in the second heat exchanger. A technical benefit may include that the flow of refrigerant to the second heat exchanger can be controlled. In particular, the refrigerant system can be controlled to prevent refrigerant to be fed to the second heat exchanger, and, as such, not exchange heat with the second coolant circuit.

Optionally in some examples, including in at least one preferred example, the refrigerant system further comprises a third refrigerant valve arranged in the third refrigerant circuit, the third refrigerant valve being arranged to control a flow of refrigerant flowing in the third heat exchanger. A technical benefit may include that the flow of refrigerant to the third heat exchanger can be controlled. In particular, the refrigerant system can be controlled to prevent refrigerant to be fed to the third heat exchanger, and, as such, not exchange heat with the third coolant circuit.

Optionally in some examples, including in at least one preferred example, the refrigerant system further comprises a fourth refrigerant valve arranged in the fourth refrigerant circuit, the fourth refrigerant valve being arranged to control a flow of refrigerant flowing in the fourth heat exchanger. A technical benefit may include that the flow of refrigerant to the fourth heat exchanger can be controlled. In particular, the refrigerant system can be controlled to prevent refrigerant to be fed to the fourth heat exchanger, and, as such, not exchange heat with the component/structure arranged in communication with the fourth heat exchanger.

Optionally in some examples, including in at least one preferred example, the vehicle battery system comprises a pair of vehicle batteries arranged in parallel with each other. A technical benefit may include that the pair of vehicle batteries may be individually thermally controlled. Hereby, the temperature level for each of the pair of vehicle batteries may be controlled to obtain an optimum temperature level.

Optionally in some examples, including in at least one preferred example, the first heat exchanger comprises a pair of first heat exchanger, wherein a first one of the pair of vehicle batteries is arranged in fluid communication between the first coolant valve and a first one of the pair of first heat exchanger, and the second one of the pair of vehicle batteries is arranged in fluid communication between the first coolant valve and the second one of the pair of first heat exchangers. A technical benefit may include that an even further improved thermal control of the pair of vehicle batteries may be obtained. The pair of first heat exchangers may both be connected to the first refrigerant circuit.

Optionally in some examples, including in at least one preferred example, the first fluid pump is arranged in fluid communication between the first coolant valve and the pair of first heat exchangers. A technical benefit may include that coolant to the vehicle battery system can be isolated into smaller coolant circuits. The first fluid pump can hence move the coolant in the smaller coolant circuit. This may permit the temperature of the battery system to be controlled using the heat exchange to the refrigerant circuit without having to overcome any heat added to the rest of the coolant system for e.g. the vehicle electric system or the ambient air.

Optionally in some examples, including in at least one preferred example, the first coolant circuit of the coolant system further comprises an auxiliary heater element. A technical benefit may include that additional heat may be provided to the vehicle battery system in very cold ambient conditions.

Optionally in some examples, including in at least one preferred example, the auxiliary heater element is arranged in fluid communication between the first heat exchanger and the vehicle battery system. A technical benefit may include the auxiliary heater element can controllably increase the temperature of the vehicle battery system.

Optionally in some examples, including in at least one preferred example, the first coolant valve is operable in a first state in which a flow of fluid is flowing solely in the first coolant circuit, and a second state in which the flow of fluid is flowing between the first and third coolant circuits. A technical benefit may include that a desirable control of the coolant system may be obtained, where the first coolant valve can be controlled such that the first coolant circuit is isolated from the third coolant circuit, or to control the flow of coolant to flow between the first and third coolant circuits.

Optionally in some examples, including in at least one preferred example, the second coolant valve is operable in a first state in which a flow of coolant is flowing solely in the second coolant circuit, and a second state in which the flow of coolant is flowing between the second and third coolant circuits. A technical benefit may include that a desirable control of the coolant system may be obtained, where the second coolant valve can be controlled such that the second coolant circuit is isolated from the third coolant circuit, or to control the flow of coolant to flow between the second and third coolant circuits.

Optionally in some examples, including in at least one preferred example, a flow of coolant is flowing solely in the third coolant circuit when the first and second coolant valves assumes the first state, respectively.

Optionally in some examples, including in at least one preferred example, the refrigerant system and the coolant system are controlled in response to an ambient temperature level and a parameter indicative of a temperature level of the vehicle battery system. A technical benefit may include that the temperature of the vehicle battery system can be controlled to obtain a desired temperature level. The parameter indicative of a temperature level of the vehicle battery system may relate to a current temperature level of the vehicle battery system and a desired temperature level of the vehicle battery system.

Optionally in some examples, including in at least one preferred example, the refrigerant system is controlled by controlling the refrigerant compressor and a position of the four-way valve. A technical benefit may include that the four-way valve may be controlled to reverse the flow direction within the refrigerant system. The refrigerant compressor may on the other hand always direct a flow of pressurized in the same direction. Thus, the flow direction within the refrigerant system may be controlled by the four-way valve.

Optionally in some examples, including in at least one preferred example, the coolant system is controlled by controlling a position of the first and second coolant valves, and controlling at least one of the first, second and third fluid pumps to pump a flow of fluid in the coolant system.

According to a second aspect, there is provided a vehicle comprising the vehicle thermal system according to any of the above described examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a vehicle thermal system according to an example,
Fig. 3 is an exemplary illustration of a vehicle thermal system according to another example,
Fig. 4 is an exemplary illustration of a coolant system for the vehicle thermal system according to an example,
Fig. 5 is an exemplary illustration of a coolant system for the vehicle thermal system according to an example,
Fig. 6 is an exemplary illustration of a coolant system for the vehicle thermal system according to an example,
Figs. 7 - 8 are exemplary illustrations of different operating modes operable by the vehicle thermal system according to examples, and
Fig. 9 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure presented in the following aims at describing an efficient and less complex vehicle thermal system. The vehicle thermal system comprises a refrigerant system and a coolant system that can beneficially exchange heat with each other by the use of a number of heat exchangers.

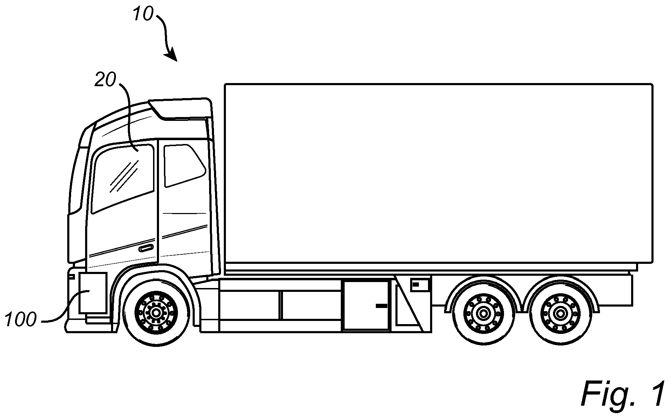

With reference to Fig. 1, which is an exemplary illustration of a vehicle 10 according to an example. The vehicle 10 comprises a vehicle cab 20 in which an operator of the vehicle 10 can control and operate the vehicle 10. The vehicle 10 is preferably propelled at least by an electric traction motor (not shown). The vehicle 10 can thus be a so called battery electric vehicle (BEV). However, the vehicle may in addition comprise an internal combustion engine (not shown) and is in such case a so called hybrid electric vehicle (HEV). The vehicle 10 may also comprise a fuel cell arranged to generate electric energy whereby the vehicle 10 is a so called fuel cell electric vehicle (FCEV). In any of these alternatives, the vehicle 10 comprises a vehicle battery system, a radiator and a vehicle electric system. These systems and components need thermal control for efficient operation. The vehicle 10 therefore comprises a vehicle thermal system 100 which will in the following be described in further detail.

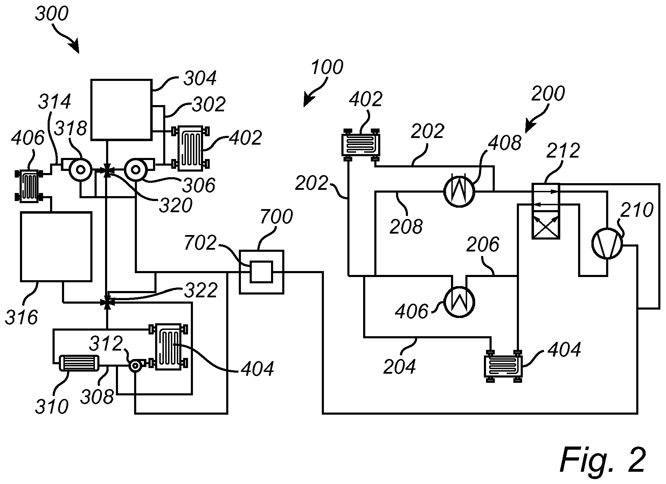

With initial reference to Fig. 2 which is an exemplary illustration of a vehicle thermal system 100 according to an example. The vehicle thermal system 100 comprises a refrigerant system 200 and a coolant system 300. The refrigerant system 200 as well as the coolant system 300 are both closed-loop systems, where the refrigerant system 200 contains a refrigerant that cycles through the refrigerant system 200, while the coolant system 300 contains a coolant, preferably a liquid coolant, that circulates the coolant system 300. The coolant will in the following merely be referred to as a fluid.

The refrigerant system 200 comprises a refrigerant compressor 210 that is arranged to circulate the refrigerant in the refrigerant system 200. In the exemplification depicted in Fig. 2, the refrigerant compressor 210 directs the flow of refrigerant in a single direction and the flow direction of refrigerant in the refrigerant system 200 is instead controlled by a four-way valve 212 of the refrigerant system 200. In further detail, the four-way valve 212 can be arranged in a first position as indicated in Fig. 2, and in a second position in which the refrigerant is flowing in an opposite direction in the refrigerant system 200 compared to when the for-way valve 212 assumes the first position.

The refrigerant system 200 further comprises a first refrigerant circuit 202, a second refrigerant circuit 204 and a third refrigerant circuit 206. The first 202, second 204 and third 206 refrigerant circuits are connected to each other and arranged in fluid communication with the refrigerant compressor 210 via the four-way valve 212. Thus, the flow of refrigerant from the refrigerant compressor 210 can directed through the first 202, second 204 and third 206 refrigerant circuits. The exemplified refrigerant 200 system also comprises a fourth refrigerant circuit 208.

The coolant system 300 comprises a first coolant circuit 302, a second coolant circuit 308 and a third coolant circuit 314. The first 302, second 308 and third 314 coolant circuits are arranged in fluid communication with each other. The first coolant circuit 302 comprises a first fluid pump 306 arranged to control and pump a flow of fluid in the first coolant circuit 302. The first coolant circuit 302 is connected to a vehicle battery system 304. The vehicle battery system 304 preferably comprises one or more traction batteries provided with one or more battery cells. The flow of fluid in the first coolant circuit 302 can thus control a temperature of the battery system 304.

The second coolant circuit 308 comprises a second fluid pump 312 arranged to control and pump a flow of fluid in the second coolant circuit 308. The second coolant circuit 308 is connected to a radiator 310. The radiator 310 is arranged to receive ambient air. Hence, the temperature level of the liquid in the second coolant circuit 308 can be controlled or affected by the ambient temperature.

The third coolant circuit 314 comprises a third fluid pump 318 arranged to control and pump a flow of fluid in the third coolant circuit 314. The third coolant circuit 314 is connected to a vehicle electric system 316. The third coolant circuit 314 is thus arranged to thermally control the vehicle electric system 316. The vehicle electric system 316 may, for example, comprise the electric traction motor arranged to propel the vehicle, one or more battery charger, an electric motor fan, etc.

Moreover, the coolant system 300 also comprises a first coolant valve 320 and a second coolant valve 322. The first 320 and second 322 coolant valves are controllable to direct the fluid inside the coolant system 300 to thermally control the batter system 304 and/or the vehicle electric system 316 depending on various thermal conditions and prerequisites as will be described in further detail below. In further detail, the first coolant valve 320 is connected to the first 302 and third 314 coolant circuits, while the second coolant valve 322 is connected to the second 308 and third 314 coolant circuits. The vehicle thermal system 100 can hereby be controlled in a number of various operating modes by e.g. controlling the first 320 and second 322 coolant valves, of which some of these mode will be described in further detail below.

Further, and as illustrated in Fig. 2, the vehicle thermal system 100 also comprises a first heat exchanger 402, a second heat exchanger 404 and a third heat exchanger 406. Each of the first 402, second 404 and third 406 heat exchangers are connected between the refrigerant system 200 and the coolant system 300. In particular, the first heat exchanger 402 is arranged in the first coolant circuit 302 and in the first refrigerant circuit 202. Hereby, the first coolant circuit 302 and the first refrigerant circuit 202 can exchange heat with each other. The second heat exchanger 404 is arranged in the second coolant circuit 308 and in the second refrigerant circuit 204. Hereby, the second coolant circuit 308 and the second refrigerant circuit 204 can exchange heat with each other. The third heat exchanger 406 is arranged in the third coolant circuit 314 and in the third refrigerant circuit 206. Hereby, the third coolant circuit 314 and the third refrigerant circuit 206 can exchange heat with each other.

In the example depicted in Fig. 2, the refrigerant system 200 also comprises a fourth heat exchanger 408. The fourth heat exchanger 408 arranged in the fourth refrigerant circuit 208. The fourth heat exchanger 408 may be connected to the vehicle cab 20 to thermally control the interior of the vehicle cab 20. The first 402 and fourth 408 heat exchangers may be arranged in parallel with each other in the refrigerant system 200. Hence, the first 202 and fourth 208 refrigerant conduits are arranged as parallel refrigerant conduits. In a similar vein, the second 404 and third 406 heat exchangers may be arranged in parallel with each other in the refrigerant system 200, i.e. the second 204 and third 206 refrigerant conduits may be arranged in parallel with each other.

The exemplified vehicle thermal system 100 may further comprise a computer system 700 comprising processing circuitry 702. The processing circuitry 702 is connected to, and operable to control, the refrigerant compressor 210 and the four-way valve 212 of the refrigerant system 200. The processing circuitry 702 is also connected to, and operable to control, the first 306, second 312 and third 318 fluid pumps of the coolant system 300 as well as the first 320 and second 322 coolant valves of the coolant system 300. An example of the computer system 700 and the processing circuitry 702 will be described in further detail below.

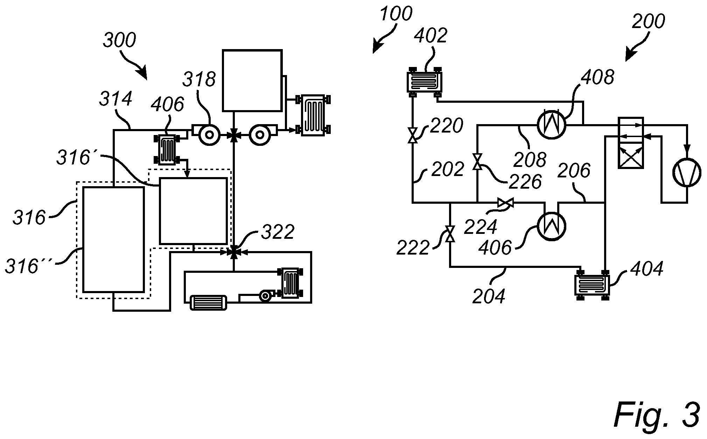

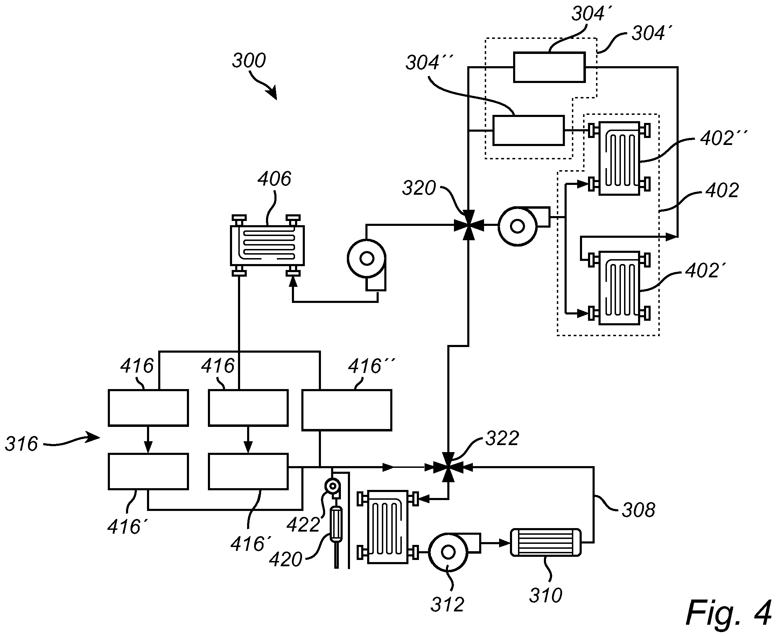

Reference is made to Fig. 3 which is an exemplary illustration of the vehicle thermal system 100 according to another example. In particular, the exemplification in Fig. 3 is a further detailed alternative of the vehicle thermal system 100 compared to the above described vehicle thermal system 100 in relation to Fig. 2. The following will only describe the differences between the example in Fig. 3 in relation to Fig. 2 for simplifying for the skilled reader. Also, in the example depicted in Fig. 3, as well as in Figs. 4-6, the computer system 700 and the processing circuitry 702 have been omitted to simplify the illustrations for the skilled reader. It should however be readily understood that valve, pumps, compressors, etc. are controllable by the processing circuitry also for these examples.

In particular, the refrigerant system 200 illustrated in Fig. 3 comprises a first refrigerant valve 220, a second refrigerant valve 222, a third refrigerant valve 224 and a fourth refrigerant valve 226. In particular, the first refrigerant valve 220 is arranged in the first refrigerant circuit 202. The first refrigerant valve 220 is arranged to control a flow of refrigerant in the first heat exchanger 402. Thus, when the first refrigerant valve 220 is arranged in an open position, refrigerant flows into the first heat exchanger 402. When the first refrigerant valve 220 is arranged in a closed position, refrigerant does not flow into the first heat exchanger 402. The above described processing circuitry 702 is configured to control the first 220, second 222, third 224 and fourth 226 refrigerant valves. Each of the refrigerant valves 220, 222, 224 and 226 may also be configured to assume a third, pulsating state in which each of the refrigerant valves are pulsating between the closed and open position to operate as an expansion valve.

The second refrigerant valve 222 is arranged in the second refrigerant circuit 204. The second refrigerant valve 222 is arranged to control a flow of refrigerant in the second heat exchanger 404. Thus, when the second refrigerant valve 222 is arranged in an open position, refrigerant flows into the second heat exchanger 404. When the second refrigerant valve 222 is arranged in a closed position, refrigerant does not flow into the second heat exchanger 404.

The third refrigerant valve 224 is arranged in the third refrigerant circuit 206. The third refrigerant valve 224 is arranged to control a flow of refrigerant in the third heat exchanger 406. Thus, when the third refrigerant valve 224 is arranged in an open position, refrigerant flows into the third heat exchanger 406. When the third refrigerant valve 224 is arranged in a closed position, refrigerant does not flow into the third heat exchanger 406.

Finally, the fourth refrigerant valve 226 is arranged in the fourth refrigerant circuit 208. The fourth refrigerant valve 226 is arranged to control a flow of refrigerant in the fourth heat exchanger 408. Thus, when the fourth refrigerant valve 226 is arranged in an open position, refrigerant flows into the fourth heat exchanger 408. When the fourth refrigerant valve 226 is arranged in a closed position, refrigerant does not flow into the fourth heat exchanger 408.

In the coolant system 300 depicted in Fig. 3, the vehicle electric system 316 comprises a first vehicle electric system 316' and a second vehicle electric system 316" arranged in parallel with each other. The third heat exchanger 406 is arranged in fluid communication between the third fluid pump 318 and the first vehicle electric system 316', while the second vehicle electric system 316" is arranged in fluid communication between the third fluid pump 318 and the second coolant valve 322. The first vehicle electric system 316' may comprise a number of electrical vehicle components such as e.g. an air compressor, DC/DC converter(s), etc. The second vehicle electric system 316" may comprise a number of electric motor systems, such as e.g. one or more capacitors, the electric traction motor(s), charger, etc.

Reference is now made to Figs. 4 - 7 for describing still further examples of the coolant system 300. The coolant systems described in relation to Figs. 4 - 7 are part of the above described vehicle thermal system 100 and hence connected to the above described refrigerant system 200 via the first 402, second 404 and third 406 heat exchangers.

With initial reference to Fig. 4, vehicle battery system 304 comprises a pair of vehicle batteries 304', 304" arranged in parallel with each other. Thus, the vehicle battery system 304 comprises a first vehicle battery 304' and a second vehicle battery 304". In addition, the first heat exchanger 402 comprises a pair of first heat exchangers 402', 402" arranged in parallel with each other. A first one 304' of the pair of vehicle batteries is here arranged in fluid communication between the first coolant valve 320 and the first one 402' of the pair of first heat exchanger 402', 402". The second vehicle battery 304" is however arranged in fluid communication between the first coolant valve 320 and the second one 304" of the pair of first heat exchangers 402', 402". As can be seen in Fig. 4, the first fluid pump 306 is thereby arranged in fluid communication between the first coolant valve 320 and the pair of first heat exchangers 402', 402".

Furthermore, the vehicle electric system 316 is arranged in fluid communication between the third heat exchanger 406 and the second coolant valve 322. The vehicle electric system 316 is exemplified as comprising inverters 416, electric traction motors 416' and additional electrical components 416". In the second coolant circuit 308, the radiator 310 is arranged in downstream fluid communication with the second fluid pump 312 compared to e.g. the illustration in Fig. 2 where the radiator 310 is arranged in upstream fluid communication with the second fluid pump 312. The coolant system 300 also comprises a high voltage coolant heater 420 arranged in fluid communication with an additional coolant pump 422.

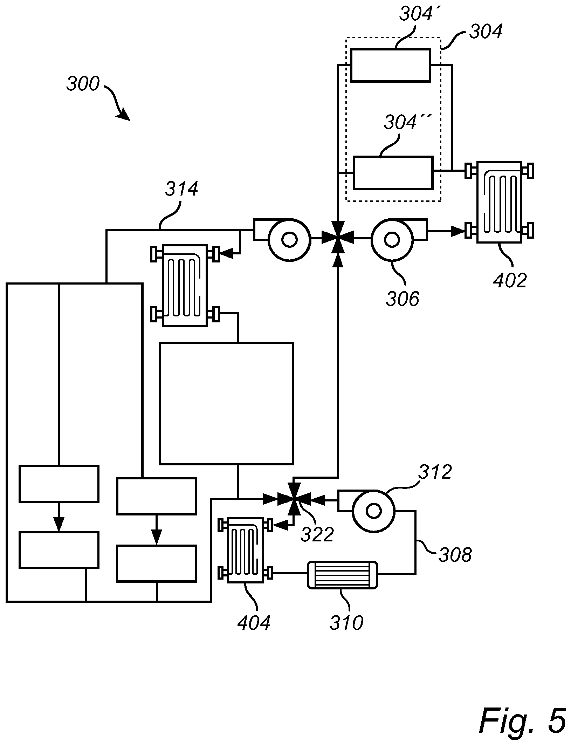

Reference is made to Fig. 5 which is an exemplary illustration of the coolant system 200 for the vehicle thermal system 100 according to an example. As can be seen, the vehicle battery system 304 comprises a pair of vehicle batteries 304', 304" arranged in parallel with each other. Thus, in a similar vein as for the example depicted in Fig. 4, the vehicle battery system 304 comprises a first vehicle battery 304' and a second vehicle battery 304". However, and compared to the example depicted in Fig. 4, the coolant system 300 comprises a single first heat exchanger 402. The first heat exchanger 402 is arranged in fluid communication between the first fluid pump 306 and the pair of vehicle batteries 304', 304". In the second coolant circuit 308, the radiator 310 is arranged in upstream fluid communication with the second fluid pump 312. The second fluid pump 312 is arranged in fluid communication between the radiator 310 and the second coolant valve 322. The second heat exchanger 404 is arranged in fluid communication between the second coolant valve 322 and the radiator 310. Further, the third coolant circuit 314 and the components therein corresponds to the third coolant circuit 314 described above in relation to Fig. 3.

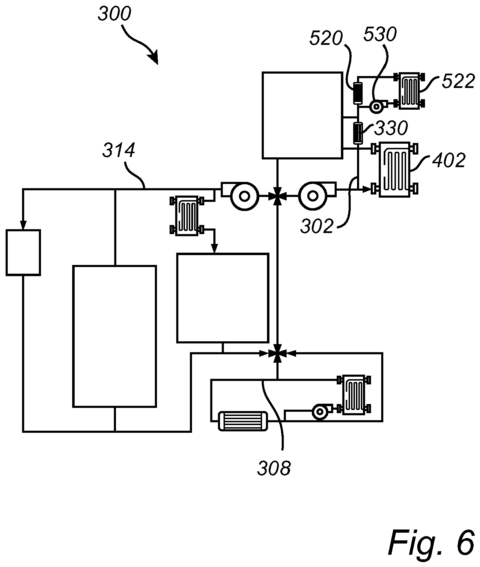

Turning to Fig. 6 which is an exemplary illustration of the coolant system 200 for the vehicle thermal system 100 according to a still further example. The third coolant circuit 314 and the components therein corresponds to the third coolant circuit 308 described above in relation to Fig. 3 and will not be described in further detail. In a similar vein, the second coolant circuit 308 and components therein may correspond to the second coolant circuit 308 described above in relation to Figs. 2 and 3.

The first coolant circuit 302 on the other hand comprises an auxiliary heater element 330. The auxiliary heater element 330 is arranged in fluid communication between the first heat exchanger 402 and the vehicle battery system 304, thereby enabling for increased heating of the vehicle battery system 304. As indicated in Fig. 6, the first coolant circuit 302 may also comprise an air-coolant heat exchanger 520 and a refrigerant-coolant heat exchanger 522. The refrigerant-coolant heat exchanger 522 may be arranged to transfer heat between the refrigerant and the coolant systems while the air-coolant heat exchanger 520 is arranged for controlling the inside of the vehicle cab. The climate radiator 520 and the cab heat exchanger 522 may be arranged to further control the temperature level inside the vehicle cab. Also, an additional pump 530 is arranged in upstream fluid communication with the cab heat exchanger 522.

By means of the coolant system 300 described above, fluid can flow in the coolant system 300 in a variety of manners. For example, the first coolant valve 320 can be operable in a first state in which a flow of fluid is flowing solely in the first coolant circuit 302. The first coolant valve 320 can also be operable in a second state in which a flow of fluid is flowing between the first 302 and third 314 coolant circuits.

In a similar vein, the second coolant valve 322 can be operable in a first state in which a flow of coolant is flowing solely in the second coolant circuit 308. The second coolant valve 322 can also be operable in a second state in which a flow of coolant is flowing between the second 308 and third 314 coolant circuits. Also, when both first 320 and second 322 coolant valves assume the first state, a flow of coolant may flow solely in the third coolant circuit 314.

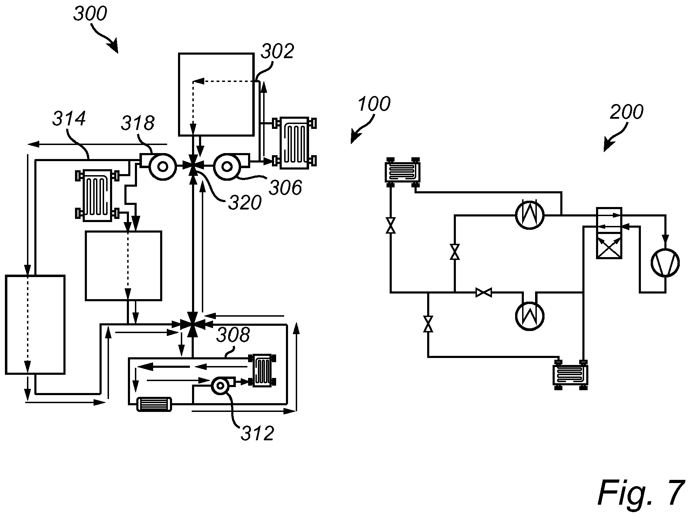

The vehicle thermal system 100 may hereby be operated in a number of operating modes. The refrigerant system 200 as well as the coolant system 300 of the vehicle thermal system 100 may be controlled in response to an ambient temperature level and a parameter indicative of a temperature level of the battery system 304, such as e.g. a current temperature and/or a desired temperature of the battery system 304. In order further improve the understanding for the skilled reader, reference is therefore made to Figs. 7-8 which illustrates two of these operating modes. The skilled reader will however readily understand that the vehicle thermal system can be controlled to assume other operating modes than the two described in the following. Further, the following will be described in relation to the coolant system 300 described above in relation to Fig. 3, although it should be readily understood that the operating modes are applicable for all exemplified coolant systems 300 described herein.

With initial reference to Fig. 7 which is an example of the vehicle thermal system in a passive mode of operation. In the passive mode of operation, the temperature of the battery system is between a first T_{bat1} and second T_{bat2} battery temperature threshold level, where the second battery temperature threshold level T_{bat2} is higher than the first battery temperature threshold level T_{bat1}. The ambient temperature level is between a first T_{amb1} and a second T_{amb2} ambient temperature threshold level, where the second ambient temperature threshold level T_{amb2} is higher than the first ambient temperature threshold T_{amb1}.

In the passive mode, the temperature level of the battery system is at a desired temperature level. In a similar vein, the temperature inside the vehicle cab is also at a desired temperature level. The refrigerant system 200 is hereby turned off. Thus, the refrigerant compressor 210 is turned off and does not flow any refrigerant inside the refrigerant system 200.

The first coolant valve 322 is controlled to assume the second state in which a flow of fluid is flowing solely in the first coolant circuit 302. The second coolant valve 322 on the other hand is controlled to assume the second state. Thus, a flow of fluid is flowing through the second 308 and third 314 coolant circuits. The first 306, second 312 and third 318 fluid pumps are controlled to pump the flow of fluid in the coolant system 300.

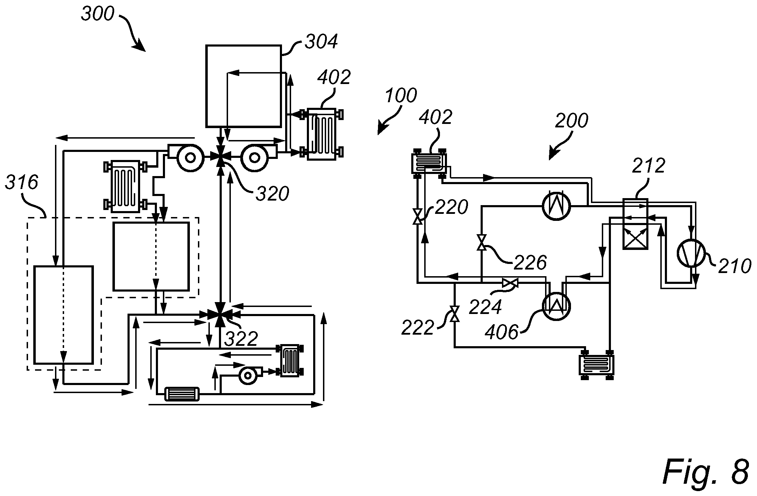

With reference to Fig. 8, which is an example of the vehicle thermal system 100 in an active battery cooling mode of operation. The temperature of the battery system is below the second T_{bat2} battery temperature threshold level while the ambient temperature level is above the second T_{amb2} ambient temperature threshold level. In addition, a temperature of the vehicle electric system relatively low. The vehicle electric system 316 is thus in need of an increased temperature limit.

In the active battery cooling mode of operation, the refrigerant compressor 210 is turned on and flows refrigerant through the refrigerant system 200. The first refrigerant valve 220 is arranged in the above described third state where the refrigerant is pulsating in the system. Hence, the first refrigerant valve is arranged to rapidly pulsate between the open and closed states allowing refrigerant to flow in the first heat exchanger 402. In addition, the third refrigerant valve 224 is also arranged in an open state allowing refrigerant to flow in the third heat exchanger 406. The four-way valve 212 is arranged to assume the first position such that the flow of refrigerant is entering the third heat exchanger 406 prior to entering the first heat exchanger 402. The second 222 and fourth 226 refrigerant valve are arranged in a closed state.

Further, the first coolant valve 320 is controlled to assume the first state in which a flow of fluid is flowing solely in the first coolant circuit 302. The second coolant valve 322 on the other hand is controlled to assume the second state. Thus, a flow of fluid is flowing through the second 308 and third 314 coolant circuits. The first 306, second 312 and third 318 fluid pumps are controlled to pump the flow of fluid in the coolant system 300.

In the active battery cooling mode of operation, the refrigerant system 200 may absorb heat from the battery system 304 and reject this heat to the vehicle electric system 316 before transferring heat to the ambient environment via the radiator.

As described above, the vehicle thermal system 100 can hence be operated in a wide range of operating modes and the two described in relation to Figs. 7 and 8 are merely to be seen as examples. The vehicle thermal system 100 can be controlled in other modes simply dependent on the ambient temperature, the temperature of the battery system, the temperature of the vehicle electric system, the temperature inside the vehicle cab, etc. The valves can hereby be controlled in a number of different combinations to obtain a desired mode.

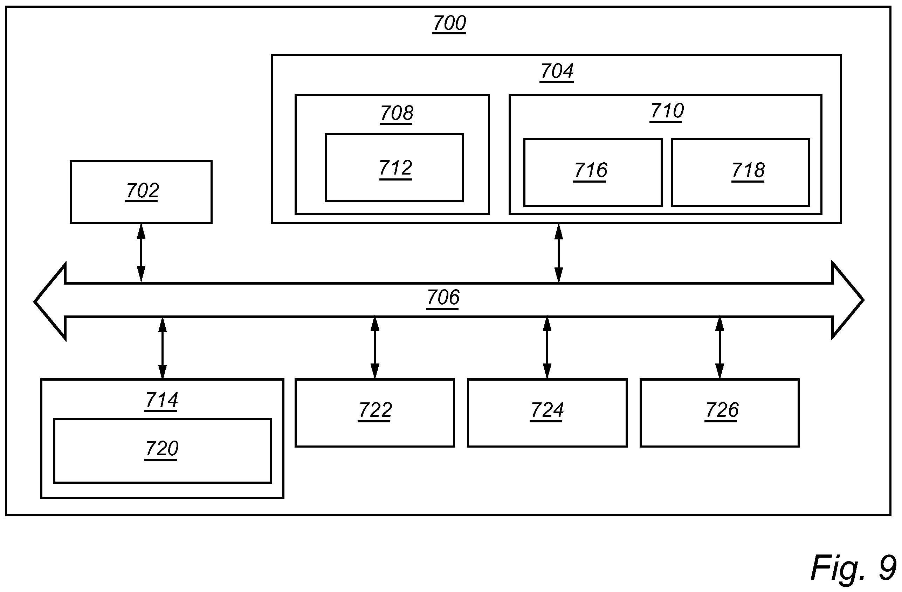

FIG. 9 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A vehicle thermal system, comprising a refrigerant system and a coolant system, wherein the refrigerant system comprises: a first refrigerant circuit, a second refrigerant circuit, a third refrigerant circuit, a refrigerant compressor, and a four-way valve, wherein the first, second and third refrigerant circuits are each arranged in fluid communication with the refrigerant compressor via the four-way valve, wherein the coolant system comprises: a first coolant circuit connected to a vehicle battery system, the first coolant circuit being arranged to thermally control the vehicle battery system, the first coolant circuit comprising a first fluid pump arranged to control a flow of fluid in the first coolant circuit, a second coolant circuit connected to a radiator configured to receive ambient air, the second coolant circuit comprising a second fluid pump arranged to control a flow of fluid in the second coolant circuit, and a third coolant circuit connected to a vehicle electric system, the third coolant circuit being arranged to thermally control the vehicle electric system, the third coolant circuit comprising a third fluid pump arranged to control a flow of fluid in the third coolant circuit, wherein the coolant system further comprises a first coolant valve connected to the first and third coolant circuits, and a second coolant valve connected to the second and third coolant circuits, wherein the vehicle thermal system further comprises a first heat exchanger arranged in the first coolant circuit and in the first refrigerant circuit, a second heat exchanger arranged in the second coolant circuit and in the second refrigerant circuit, and a third heat exchanger arranged in the third coolant circuit and in the third refrigerant circuit.

Example 2. The vehicle thermal system of example 1, wherein the second and third heat exchangers are arranged in parallel in the refrigerant system.

Example 3. The vehicle thermal system of any one of examples 1 or 2, wherein the refrigerant system further comprises a fourth refrigerant circuit arranged in fluid communication with the refrigerant compressor via the four-way valve, and a fourth heat exchanger arranged to be in fluid communication with a cab interior, the fourth heat exchanger being arranged in the fourth refrigerant circuit.

Example 4. The vehicle thermal system of example 3, wherein the first and fourth heat exchangers are arranged in parallel with each other in the refrigerant system.

Example 5. The vehicle thermal system of any one of the preceding examples, wherein the refrigerant system further comprises a first refrigerant valve arranged in the first refrigerant circuit, the first refrigerant valve being arranged to control a flow of refrigerant in the first heat exchanger.

Example 6. The vehicle thermal system of any one of the preceding examples, wherein the refrigerant system further comprises a second refrigerant valve arranged in the second refrigerant circuit, the second refrigerant valve being arranged to control a flow of refrigerant flowing in the second heat exchanger.

Example 7. The vehicle thermal system of any one of the preceding examples, wherein the refrigerant system further comprises a third refrigerant valve arranged in the third refrigerant circuit, the third refrigerant valve being arranged to control a flow of refrigerant flowing in the third heat exchanger.

Example 8. The vehicle thermal system of any one of examples 5 - 7 when dependent on any one of examples 3 or 4, wherein the refrigerant system further comprises a fourth refrigerant valve arranged in the fourth refrigerant circuit, the fourth refrigerant valve being arranged to control a flow of refrigerant flowing in the fourth heat exchanger.

Example 9. The vehicle thermal system of any one of the preceding examples, wherein the vehicle battery system comprises a pair of vehicle batteries arranged in parallel with each other.

Example 10. The vehicle thermal system of example 9, wherein the first heat exchanger comprises a pair of first heat exchanger, wherein a first one of the pair of vehicle batteries is arranged in fluid communication between the first coolant valve and a first one of the pair of first heat exchanger, and the second one of the pair of vehicle batteries is arranged in fluid communication between the first coolant valve and the second one of the pair of first heat exchangers.

Example 11. The vehicle thermal system of example 10, wherein the first fluid pump is arranged in fluid communication between the first coolant valve and the pair of first heat exchangers.

Example 12. The vehicle thermal system of any one of the preceding examples, wherein the first coolant circuit of the coolant system further comprises an auxiliary heater element.

Example 13. The vehicle thermal system of example 12, wherein the auxiliary heater element is arranged in fluid communication between the first heat exchanger and the vehicle battery system.

Example 14. The vehicle thermal system of any one of the preceding examples, wherein the first coolant valve is operable in a first state in which a flow of fluid is flowing solely in the first coolant circuit, and a second state in which the flow of fluid is flowing between the first and third coolant circuits.

Example 15. The vehicle thermal system of any one of the preceding examples, wherein the second coolant valve is operable in a first state in which a flow of coolant is flowing solely in the second coolant circuit, and a second state in which the flow of coolant is flowing between the second and third coolant circuits.

Example 16. The vehicle thermal system of examples 14 or 15, wherein a flow of coolant is flowing solely in the third coolant circuit when the first and second coolant valves assumes the first state, respectively.

Example 17. The vehicle thermal system of any one of the preceding examples, wherein the refrigerant system and the coolant system are controlled in response to an ambient temperature level and a parameter indicative of a temperature level of the vehicle battery system.

Example 18. The vehicle thermal system of example 17, wherein the refrigerant system is controlled by controlling the refrigerant compressor and a position of the four-way valve.

Example 19. The vehicle thermal system of any one of examples 17 or 18, wherein the coolant system is controlled by controlling a position of the first and second coolant valves, and controlling at least one of the first, second and third fluid pumps to pump a flow of fluid in the coolant system.

Example 20. A vehicle comprising the vehicle thermal system according to any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle thermal system (100), comprising a refrigerant system (200) and a coolant system (300), wherein the refrigerant system (200) comprises:
- a first refrigerant circuit (202), a second refrigerant circuit (204), a third refrigerant circuit (206), a refrigerant compressor (210), and a four-way valve (212), wherein the first, second and third refrigerant circuits are each arranged in fluid communication with the refrigerant compressor via the four-way valve,
wherein the coolant system (300) comprises:
- a first coolant circuit (302) connected to a vehicle battery system (304), the first coolant circuit being arranged to thermally control the vehicle battery system, the first coolant circuit (302) comprising a first fluid pump (306) arranged to control a flow of fluid in the first coolant circuit,
- a second coolant circuit (308) connected to a radiator (310) configured to receive ambient air, the second coolant circuit comprising a second fluid pump (312) arranged to control a flow of fluid in the second coolant circuit, and
- a third coolant circuit (314) connected to a vehicle electric system (316), the third coolant circuit (314) being arranged to thermally control the vehicle electric system, the third coolant circuit comprising a third fluid pump (318) arranged to control a flow of fluid in the third coolant circuit,
wherein the coolant system (300) further comprises a first coolant valve (320) connected to the first (302) and third (314) coolant circuits, and a second coolant valve (322) connected to the second (308) and third (314) coolant circuits,
wherein the vehicle thermal system (100) further comprises:
- a first heat exchanger (402) arranged in the first coolant circuit (302) and in the first refrigerant circuit (202),
- a second heat exchanger (404) arranged in the second coolant circuit (308) and in the second refrigerant circuit (204), and
- a third heat exchanger (406) arranged in the third coolant circuit (314) and in the third refrigerant circuit (206).

2. The vehicle thermal system of claim 1, wherein the second (404) and third (406) heat exchangers are arranged in parallel in the refrigerant system.

3. The vehicle thermal system of any one of claims 1 or 2, wherein the refrigerant system (200) further comprises a fourth refrigerant circuit (208) arranged in fluid communication with the refrigerant compressor (210) via the four-way valve (212), and a fourth heat exchanger (408) arranged to be in fluid communication with a cab interior, the fourth heat exchanger being arranged in the fourth refrigerant circuit.

4. The vehicle thermal system of claim 3, wherein the first (402) and fourth (408) heat exchangers are arranged in parallel with each other in the refrigerant system.

5. The vehicle thermal system of any one of the preceding claims, wherein the refrigerant system (200) further comprises a first refrigerant valve (220) arranged in the first refrigerant circuit (202), the first refrigerant valve being arranged to control a flow of refrigerant in the first heat exchanger.

6. The vehicle thermal system of any one of the preceding claims, wherein the refrigerant system (200) further comprises a second refrigerant valve (222) arranged in the second refrigerant circuit (204), the second refrigerant valve being arranged to control a flow of refrigerant flowing in the second heat exchanger.

7. The vehicle thermal system of any one of the preceding claims, wherein the refrigerant system (200) further comprises a third refrigerant valve (224) arranged in the third refrigerant circuit (206), the third refrigerant valve being arranged to control a flow of refrigerant flowing in the third heat exchanger.

8. The vehicle thermal system of any one of claims 5 - 7 when dependent on any one of claims 3 or 4, wherein the refrigerant system (200) further comprises a fourth refrigerant valve (226) arranged in the fourth refrigerant circuit (208), the fourth refrigerant valve being arranged to control a flow of refrigerant flowing in the fourth heat exchanger.

9. The vehicle thermal system of any one of the preceding claims, wherein the vehicle battery system (304) comprises a pair of vehicle batteries (304', 304") arranged in parallel with each other.

10. The vehicle thermal system of claim 9, wherein the first heat exchanger (402) comprises a pair of first heat exchanger (402', 402"), wherein a first one of the pair of vehicle batteries (304') is arranged in fluid communication between the first coolant valve (320) and a first one of the pair of first heat exchanger (402'), and the second one of the pair of vehicle batteries (304") is arranged in fluid communication between the first coolant valve (320) and the second one of the pair of first heat exchangers (402").

11. The vehicle thermal system of any one of the preceding claims, wherein the first coolant circuit (302) of the coolant system (300) further comprises an auxiliary heater element (330).

12. The vehicle thermal system of any one of the preceding claims, wherein the first coolant valve (320) is operable in a first state in which a flow of fluid is flowing solely in the first coolant circuit (302), and a second state in which the flow of fluid is flowing between the first (302) and third (314) coolant circuits.

13. The vehicle thermal system of any one of the preceding claims, wherein the second coolant valve (322) is operable in a first state in which a flow of coolant is flowing solely in the second coolant circuit (308), and a second state in which the flow of coolant is flowing between the second (308) and third (314) coolant circuits.

14. The vehicle thermal system of claims 12 or 13, wherein a flow of coolant is flowing solely in the third coolant circuit (314) when the first (320) and second (322) coolant valves assumes the first state, respectively.

15. A vehicle comprising the vehicle thermal system according to any of claims 1-14.
